# EUROPÄISCHE PATENTANMELDUNG

(11) **EP 2 103 368 A1**
(43) Veröffentlichungstag der Anmeldung: **23.09.2009**
(21) Anmeldenummer: 08005261.6
(22) Anmeldetag: 20.03.2008
(51) Int. Cl.: B23B 31/16, F16H 25/22, B23B 31/28, B23B 29/034, B23B 31/26

(54) **Spanneinrichtung für Werkzeugmaschinen**

(71) Anmelder: Hiestand, Karl, D-88630 Pfullendorf (DE)
(72) Erfinder: Hiestand, Karl, D-88630 Pfullendorf (DE)
(74) Vertreter: Engelhardt, Guido

(57) **Zusammenfassung**

Spanneinrichtung (1) für Werkzeugmaschinen (2), die mit einem Kraftspannfutter (3) versehen ist und dessen Spannbacken (4) mittels einer mit dem Kraftspannfutter (4) drehfest angeordnete Zugstange (6) betätigbar sind, wobei die rotorischen Verstellbewegungen des Servomotors (11) durch eine drehbar auf Wälzlager (24,25) gelagerte Glocke (22) in axiale Verstellbewegungen der Zugstange (6) umsetzbar sind. Im Betrieb die Glocke (22) mit gleichem Drehmoment bzw. mit gleicher Drehzahl wie der Kraftspannfutter (3) und zur Betätigung des Kraftspannfutters (3) mit einer Differenzdrehzahl bzw. einer Drehmomentdifferenz zur Kraftspannfutter (3) angetrieben wird.
Dadurch wird erreicht, dass Belastungen auf die Wälzlager (24,25) gering gehalten werden und dass ein Einsatz der Spanneinrichtung (1) bei hohen Drehzahlen und hohen Spannkräften gewährleistet ist.

## Beschreibung

Die Erfindung bezieht sich auf eine Spanneinrichtung für Werkzeugmaschinen, die mit einem kraftbetätigten Spannfutter zur Halterung eines Werkstückes versehen und dessen Spannbacken mittels einer Spanneinrichtung über eine axial verstellbare Zugstange betätigbar sind, wobei die Spanneinrichtung aus einem umschaltbaren elektrischen Servomotor und einem zwischen diesem und der Zugstange angeordneten Antriebsstrang besteht, mittels dem die zur Verstellung der Spannbacken des Kraftspannfutters erforderlichen rotorischen Verstellbewegungen des Abtriebsgliedes des Servomotors in axiale Verstellbewegungen der Zugstange umsetzbar sind, und der Antriebsstrang eine trieblich mit dem Servomotor gekoppelte, vorzugsweise auf einer mit der Maschinenspindel verbundenen Hohlwelle drehbar gelagerte Glocke aufweist.

Eine Spanneinrichtung dieser Art ist durch die EP 1 637 260 B1 bekannt. Bei dieser Ausgestaltung, die sich in der Praxis gut bewährt hat, sind auf der mit der Maschinenspindel fest verbundenen und somit im Betrieb umlaufenden Hohlwelle mittels mehrerer Wälzlager die Glocke sowie ein Zwischenglied abgestützt, die über Innen- und Außengewinde miteinander trieblich verbunden sind. Das Zwischenglied ist hierbei ortsfest gehalten, die Glocke ist dagegen über einen Zahnriementrieb an den Servomotor angeschlossen. Zum Spannen eines Werkstückes bzw. zum Löten der Spannbacken sind mit Hilfe des Servomotors rotorische Verstellbewegungen der Glocke auszulösen, die durch die ineinander greifenden an der Glocke und dem Zwischenglied vorgesehenen Gewinde in axiale Verstellbewegungen des Zwischenstückes umgewandelt werden. Über eine mit diesem verbundenen Schiebemuffe werden die Verstellbewegungen auf die Hohlwelle übertragen.

Obwohl der Bauaufwand somit erheblich ist, ist diese Spanneinrichtung oftmals nicht einsetzbar. Die zur Abstützung der Glocke und des Zwischenstückes vorgesehene Wälzlager werden nämlich nicht nur durch die hohen Drehzahldifferenzen zwischen diesen einerseits feststehenden Bauteilen und der andererseits umlaufenden Hohlwelle belastet, sondern auch durch die Axialkräfte, die bei der Übertragung der Verstellbewegungen auftreten. Die bekannte Spanneinrichtung ist daher nur einsetzbar, wenn bei möglichst niederen Drehzahlen die geforderten Spannkräfte ebenfalls niedrig gehalten werden.

Aufgabe der Erfindung ist es daher, eine Spanneinrichtung für Werkzeugmaschinen der vorgenannten Gattung in der Weise auszubilden, dass keine Differenzdrehzahlen zwischen der Glocke und der Hohlwelle in Kauf zu nehmen sind, und dass somit Belastungen der diese tragenden Wälzlager gering gehalten werden. Des Weiteren sollen die Wälzlager nicht durch axiale Kräfte beansprucht werden. Auch soll gegenüber der bekannten Spanneinrichtung der Bauaufwand in einem erheblichen Maße reduziert werden, dennoch soll bei stets hoher Betriebssicherheit ein Einsatz, vor allem auch bei hohen auftretenden Spannkräften und hohen Drehzahlen ermöglicht werden.

Gemäß der Erfindung wird dies bei einer Spanneinrichtung für Werkzeugmaschinen der eingangs genannten Art dadurch erreicht, dass die Glocke über Umlenkglieder unmittelbar mit der Hohlwelle trieblich verbunden ist, dass der Servomotor einen ortsfest angeordneten, vorzugsweise an der Spindel der Werkzeugmaschine abgestützten Stator und einen mit der Glocke unmittelbar oder über Verbindungsglieder trieblich gekoppelten Rotor aufweist, und dass der Rotor des Servomotors mittels eines Steuergliedes, beispielsweise der Steuerung der Werkzeugmaschinen, derart gesteuert antreibbar ist, dass im Betrieb der Werkzeugmaschine die Glocke mit gleichem Drehmoment bzw. mit gleicher Drehzahl wie die Hohlwelle und zur Betätigung des Kraftspannfutters mit einer Differenzdrehzahl bzw. mit einer Drehmomentdifferenz zur Hohlwelle antreibbar ist.

Zweckmäßig ist es hierbei, den Rotor des Servomotors über einen Zahnriementrieb unmittelbar mit der Glocke oder dieser vorgeschalteten Verbindungsgliedern trieblich zu verbinden, wobei als Verbindungsglied ein Planetenradgetriebe als Untersetzungsgetriebe vorgesehen werden kann, dessen Sonnenrad an einem angetriebenen Zwischenstück angebracht ist und dessen in das Sonnenrad eingreifende Planetenräder in der Hohlwelle abgestützt und mit der Glocke trieblich verbunden sind oder ein Wellengetriebe, dessen verformbares Kupplungsteil mit dem Rotor in Triebverbindung steht und mit der Glocke periodisch koppelbar ist.

Angebracht ist es zur Erhöhung der Stabilität des Weiteren, die Glocke zusätzlich, vorzugsweise zusammen mit dem Rotor des Servomotors, in einem an der Spindel der Werkzeugmaschine befestigten Flansch drehbar zu lagern.

Die Übertragung der vorzunehmenden Verstellbewegungen kann in einfacher Weise von der Glocke über einen Rollenwälztrieb oder mittels Gewindespindeln als Umlenkglieder auf die Hohlwelle erfolgen.

Zur Erhöhung der Betriebssicherheit ist es ferner angezeigt, die Glocke mittels einer Sicherungseinrichtung mit der Hohlwelle selbsttätig zu verriegeln.

Dies kann in der Weise bewerkstelligt werden, dass die Sicherungseinrichtung aus einem in der Glocke entgegen der Kraft einer Feder durch einen Elektromagneten gehaltenen Sicherungsbolzen gebildet ist, der bei Ausfall der Magnetkraft in eine in der Hohlwelle vorgesehene Ausnehmung einrastet. Auch sollte der Sicherungseinrichtung eine mit deren Verriegelungsbolzen zusammenwirkende Stellungsanzeige zugeordnet sein.

Wird eine Spannrichtung für Werkzeugmaschinen gemäß der Erfindung ausgebildet, so ist es nicht nur möglich, die Spannkraft des angeschlossenen Kraftspannfutters während des Betriebes der Werkzeugmaschine zu verändern, sondern es können bei hohen Drehzahlen der Maschinenspindel auch äußerst hohe Spannkräfte erzeugt werden. Die Glocke wird nämlich im Betrieb der Werkzeugmaschine durch den Servomotor synchron mit der mit dieser verbundenen Hohlwelle angetrieben. Mit Hilfe des Servomotors kann aber unabhängig von der jeweiligen Drehzahl der Hohlwelle die auf das Kraftspannfutter ausgeübte Kraft verändert werden. Auf diese Weise wird die auf das Kraftspannfutter ausgeübte Spannkraft erhöht oder reduziert.

Der Bauaufwand, mittels dem dies zu erreichen ist, ist sehr gering, da lediglich die Glocke auf der Hohlwelle zu lagern und mittels des Servomotors anzutreiben ist. Eine axiale Belastung der die Glocke abstützenden Wälzlager ist somit durch eine Schiebemuffe, wie bei der bekannten Spanneinrichtung, nicht gegeben, eine lange und störungsfreie Funktionsfähigkeit ist demnach gewährleistet. Auch ist sichergestellt, dass bei eventuell auftretenden Störungen unerwünschte Änderungen der Spannkraft nicht erfolgen können. Die Spanneinrichtung ist in derartigen Fällen vielmehr zuverlässig verriegelt. Bei einfachem konstruktivem Aufbau und einer dadurch gegebenen hohen Betriebssicherheit gewährleistet die vorschlagsgemäß ausgebildete Spanneinrichtung demnach stets eine optimale Betriebsweise und ermöglicht einen vielseitigen Einsatz. vorschlagsgemäß ausgebildete Spanneinrichtung demnach stets eine optimale Betriebsweise und ermöglicht einen vielseitigen Einsatz.

In der Zeichnung ist ein Ausführungsbeispiel einer gemäß der Erfindung ausgebildeten Spanneinrichtung für Werkzeugmaschinen, das nachfolgend im einzelnen erläutert ist, dargestellt. Hierbei zeigt:
- Figur 1: Die in eine Werkzeugmaschine eingebaute Spanneinrichtung, teilweise in schematischer Darstellung und teilweise in einem Längsschnitt,
- Figur 2: einen Ausschnitt aus Figur 1, in einer vergrößerten Wiedergabe,
- Figuren 3 und 4: Ausführungsvarianten der Spanneinrichtung nach Figur 1, in Darstellungen nach Figur 2, und
- Figur 5: eine abgeänderte Ausgestaltung der Spanneinrichtung nach Figur 1.

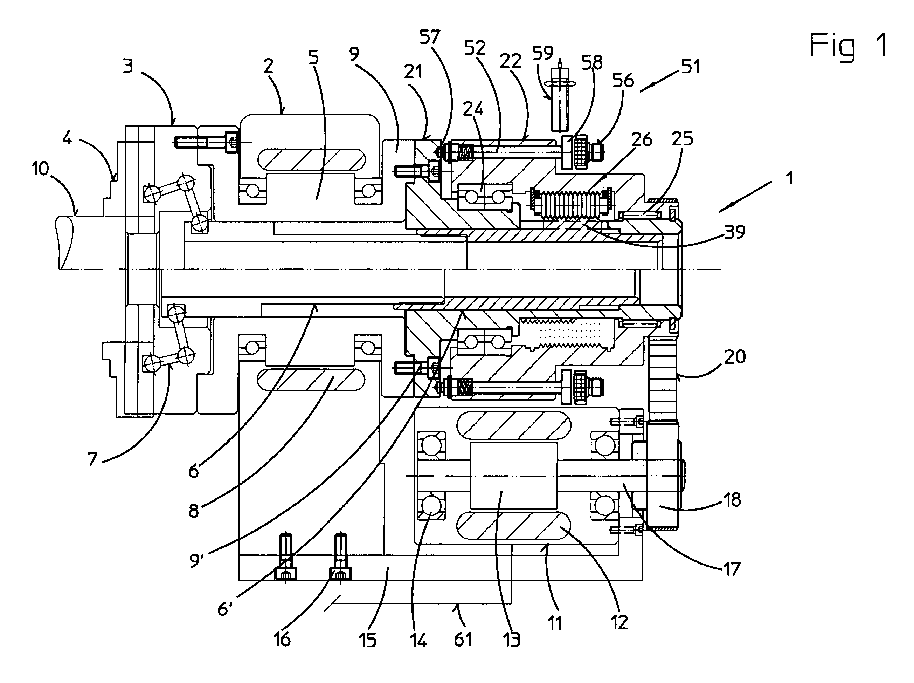

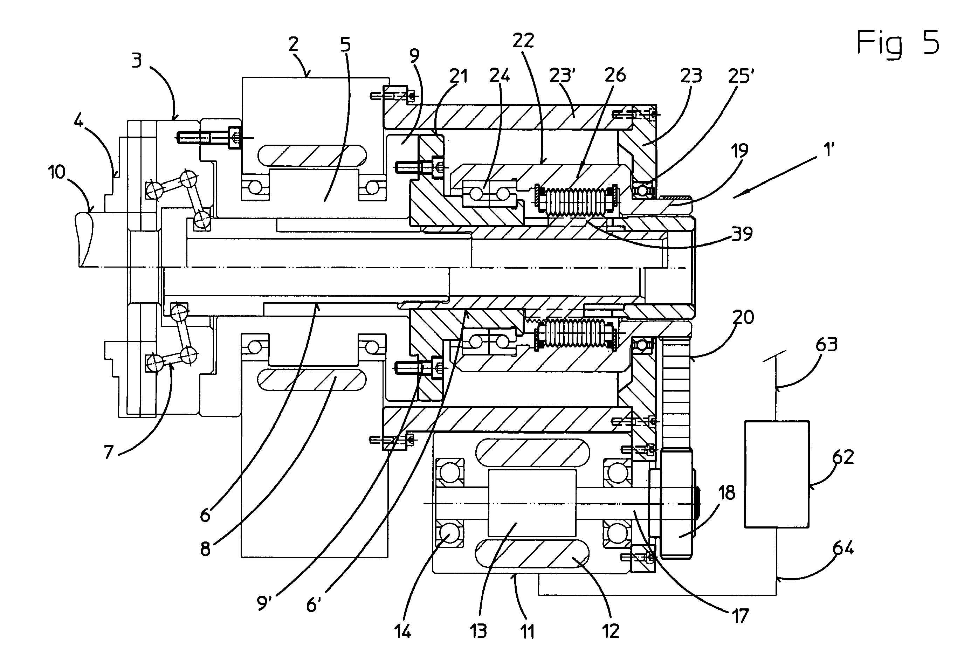

Die in den Figuren 1 und 5 dargestellte und mit 1 bzw. 1' bezeichnete Spanneinrichtung dient zur Betätigung eines auf einer Werkzeugmaschine 2 angeordneten Kraftspannfutters 3, mittels dessen radial verstellbarer Spannbacken 4 ein zu bearbeitendes Werkzeugstück 10 in dem Kraftspannfutter 3 einspannbar ist. Die Spanneinrichtung 1 bzw. 1' besteht hierbei im wesentlichen aus einem umschaltbaren elektrischen Servomotor 11, einer an einem mit einer durch einen Motor 8 antreibbaren Spindel 5 der Werkzeugmaschine 2 mittels Schrauben 9' befestigten Flansch 9 angebrachten Hohlwelle 21 sowie einer Glocke 22, die über Wälzlager 24 und 25 auf der Hohlwelle 21 drehbar gelagert und mit dem Servomotor 11 trieblich verbunden ist.

Der Servomotor 11 weist einen Stator 12, der in einem mittels Schrauben 16 an der Werkzeugmaschine 2 befestigten Träger 15 abgestützt ist, sowie einen mittels Wälzlager 14 in dem Stator 11 drehbar gelagerten Rotor 13 auf. Auf einer den Rotor 13 tragenden Welle 17 ist ein Zahnrad 18 angeordnet, das über einen in dieses eingreifenden Zahnriemen 20 mit einem Zahnrad 19 trieblich verbunden ist, das an der Glocke 22 angearbeitet ist. Die Glocke 22 ist somit durch den umschaltbaren Servomotor 11 in beiden Drehrichtungen antreibbar.

Über unterschiedlich ausgebildete Umlenkglieder 26 bzw. 26' ist die Glocke 22 des Weiteren trieblich mit einer Zugstange 6 bzw. an einem dieser angebrachten Verlängerungsstück 6' verbunden, die über Umlenkhebel 7 auf die Spannbacken 4 einwirkt. Bei einer Verstellbewegung der Zugstange 6 nach links werden die Spannbacken 4 somit nach außen, bei einer Verstellbewegung nach rechts dagegen nach innen in Richtung des Werkstückes 10 verstellt.

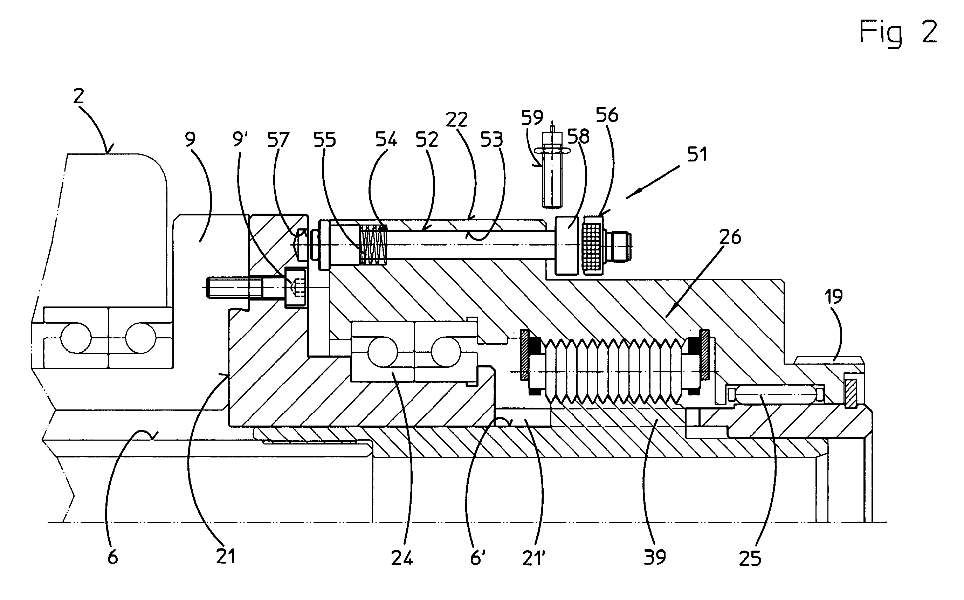

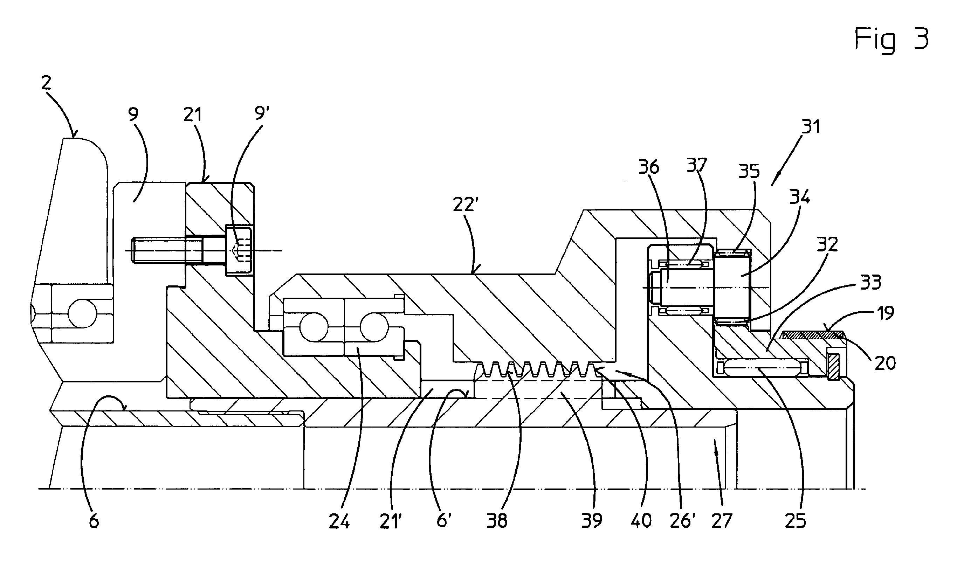

Das Umlenkglied 26 ist gemäß den Darstellungen in den Figuren 1 und 2 als Rollenwälztrieb ausgebildet. Nach Figur 3 besteht das Umlenkglied 26' aus zwei ineinander greifenden Gewindespindeln 38 und 40, die einerseits in die Glocke 22' und anderseits in einen an dem Verlängerungsstück 6' der Zugstange 6 angebrachten eine in die Hohlwelle 21 eingearbeitete Freisparung 21' durchgreifenden Ansatz 39 angearbeitet sind.

Des Weiteren sind zwischen dem Servomotor 11 und der Glocke 22 bzw. 22' bzw. 22" unterschiedlich gestaltete Umlenkglieder 27 bzw. 28 als Untersetzungsgetriebe angeordnet. des Zahnriemens 20 antreibbar ist. Das Hohlrad 35 ist hierbei an der Glocke 22' vorgesehen und die Planetenräder 34 sind mittels abstehender Zapfen 36 und Wälzlager 37 drehbar in der Hohlwelle 21 gelagert, so dass ein über den Zahnriemen 20 eingeleitetes Drehmoment auf die Glocke 22' mit reduzierter Drehzahl übertragbar ist.

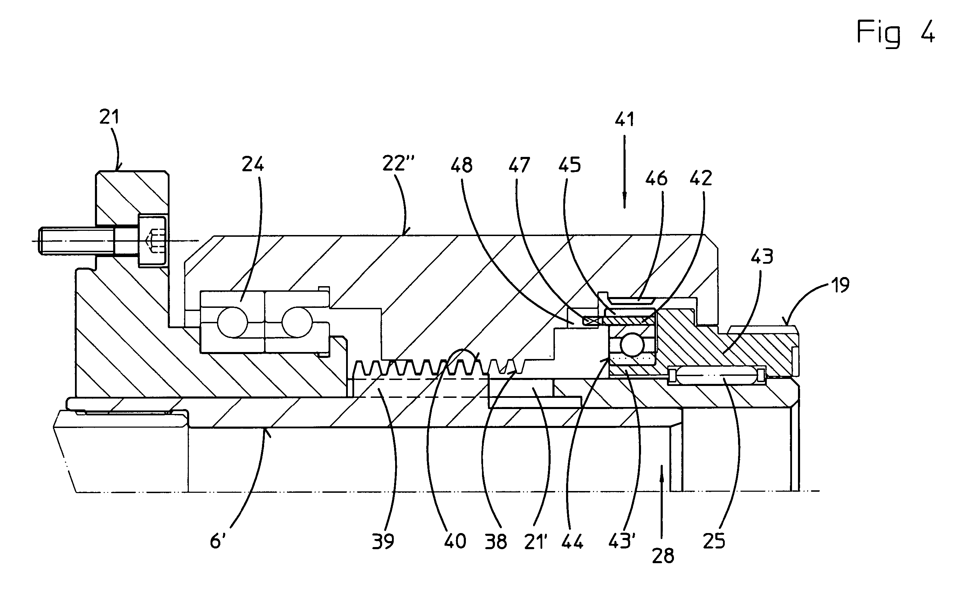

In Figur 4 ist gezeigt, dass das Umlenkglied 28 als Wellengetriebe 41 ausgebildet sein kann. An einem Zwischenstück 43, an dem der Zahnkranz 19 für den Zahnriemen 20 angearbeitet ist, ist ein oval gestalteter Ansatz 43' angeformt, auf dem mittels eines Wälzlagers 44 und ein mit einer Verzahnung 45 versehenes Kupplungsteil 42 abgestützt sind. Beim Aufpressen werden das Kupplungsteil 42 und das Wälzlager 44 gleichförmig oval verformt ist. Das Kupplungsteil 42 wird umlaufend entsprechend der ovalen Gestaltung des Ansatzstückes 43' in einer an der Glocke 22' eingearbeitete Verzahnung 46 eingeführt. Dabei ist das Kupplungsteil 42 mittels eines Ansatzes 47 in einer Nut 48 abgestützt. Das Zwischenstück 43 ist auf diese Weise trieblich zwar ständig mit der Glocke 22" verbunden, die Drehzahl des Zwischenstückes 43 wird aber mit Hilfe des Wellengetriebes 41 in einem erheblichen Maße reduziert.

Um das Werkstück 10 einzuspannen, wird bei still gesetztem Motor 8 und somit still stehender Spindel 5 dieses ist in das Kraftspannfutter 3 eingeführt, und der Servomotor 11 wird danach in Betrieb genommen. Über den Zahnriemen 20 wird somit die Glocke 22 angetrieben und deren Drehbewegung wird über das Umlenkglied 26 auf die Zugstange 6 bzw. das Verlängerungsstück 6' als axiale Verstellbewegung übertragen. Je nach Drehrichtung der Glocke 22 wird somit die Zugstange 6 nach rechts oder links verschoben, und das Werkstück 10 wird außen oder innen mittels der Spannbacken 4 eingespannt.

Soll während der Bearbeitung des Werkstückes 10 die auf dieses ausgeübte Spannkraft erhöht oder reduziert werden, da zum Beispiel die Art der Bearbeitung geändert wurde, so ist das abgegebene Drehmoment des Servormotors 11 bzw. dessen Drehzahl, durch den im Betrieb die Glocke synchron zu der Hohlwelle 21 angetrieben wird, zu verändern. Dadurch wird die Glocke 22 gegenüber der Hohlwelle 21 mit einer geringfügig höheren oder einer geringfügig niederen Drehzahl angetrieben, so dass die Zugstange 6 zur Reduzierung der Spannkraft des Kraftspannfutters 3 nach links bzw. zur Erhöhung der Spannkraft nach rechts verschoben wird. Durch eine Veränderung des von dem Servomotor 11 abgegebenen Drehmomentes wird somit die Spannkraft des Kraftspannfutters 3 gesteuert an veränderte Betriebsbedingungen angepasst. Über das von dem Servomotor 11 abgegebene Drehmoment kann die Spannkraft des Kraftspannfutters 3 bestimmt werden.

Der Servomotor 11 ist, wie dies in Figur 1 gezeigt ist, mittels einer Steuerleitung 61 an die nicht dargestellte Steuerung der Werkzeugmaschine 2 angeschlossen, so dass ein Synchronlauf mit dem Motor 8 gegeben ist. Gemäß Figur 5 kann die Höhe des Drehmomentes des Servomotor 11 bzw. dessen Drehzahl, der hierbei in einem Flansch 23, der über ein Zwischenstück 23' an der Werkzeugmaschine 2 befestigt und in dem mittels eines Wälzlagers 25' die Glocke 22 gelagert ist, auch mittels eines gesonderten Steuergerätes 62 verändert werden, das über eine Leitung 63 an die Maschinensteuerung angeschlossen und über eine Signalleitung 64 mit dem Servomotor 14 verbunden ist.

Damit bei unvorhersehbaren Vorkommnissen, zum Beispiel einem Stromausfall, das Kraftspannfutter 3 nicht selbsttätig geöffnet wird, sondern das Werkstück 10 auch weiterhin eingespannt bleibt, ist die Spanneinrichtung 1, wie dies im einzelnen der Figur 2 zu entnehmen ist, mit einer Sicherungseinrichtung 51 ausgestattet, die im wesentlichen aus einem entgegen der Kraft einer Feder 55 axial verschiebbaren Sicherungsbolzen 52 besteht. Bei einem Stromausfall rastet der Sicherungsbolzen 52 selbsttätig in eine in der Hohlwelle 21 vorgesehene Ausnehmung 57 ein.

Im Normalbetrieb wird der Sicherungsbolzen 52, der in einer in die Glocke 22 eingearbeiteten Bohrung 53 verstellbar geführt ist, entgegen der Kraft der sich an einer Schulter 54 abstützenden Feder 55 durch einen mit einem angeformten Bund 58 zusammenwirkenden Elektromagneten 56 in der gezeigten Betriebsstellung gehalten, sobald jedoch die Kraft des Elektromagneten 56 nicht mehr wirksam ist, wird der Sicherungsbolzen 52 sofort in die Ausnehmung 57 eingeführt und die Glocke 22 ist starr mit der Hohlwelle 21 gekoppelt, so dass keine Verstellbewegungen ausführbar sind.

Mit Hilfe eines Sensor 59 als Anzeigevorrichtung, der mit dem Bund 58 zusammenwirkt, ist die jeweilige Stellung des Sicherungsbolzens 52 und somit der Betriebszustand der Spanneinrichtung 1 problemlos ermittelbar.

## Patentansprüche

1. Spanneinrichtung (1) für Werkzeugmaschinen (2), die mit einem kraftbetätigten Spannfutter (3) zur Halterung eines Werkstückes (10) versehen und dessen Spannbacken (4) mittels einer Spanneinrichtung (1) über eine axial verstellbare Zugstange (6) betätigbar sind, wobei die Spanneinrichtung (1) aus einem umschaltbaren elektrischen Servomotor (11) und einem zwischen diesem und der Zugstange (6) angeordneten Antriebsstrang besteht, mittels dem die zur Verstellung der Spannbacken (4) des Kraftspannfutters (3) erforderlichen rotorischen Verstellbewegungen des Abtriebsgliedes (13) des Servomotors (11) in axiale Verstellbewegungen der Zugstange (6) umsetzbar sind, und der Antriebsstrang eine trieblich mit dem Servomotor (11) gekoppelte, vorzugsweise auf einer mit der Maschinenspindel (5) verbundenen Hohlwelle (21) drehbar gelagerte Glocke (22) aufweist.
**dadurch gekennzeichnet,**
**dass** die Glocke (22) über Umlenkglieder (26) unmittelbar mit der Hohlwelle (21) trieblich verbunden ist, dass der Servomotor (11) einen ortsfest angeordneten, vorzugsweise an der Spindel (5) der Werkzeugmaschine (2) abgestützten Stator und einen mit der Glocke (22) unmittelbar oder über Verbindungsglieder (27, 28) trieblich gekoppelten Rotor (13) aufweist, und dass der Rotor (13) des Servomotors (11) mittels eines Steuergliedes (62), beispielsweise der Steuerung der Werkzeugmaschinen (2), derart gesteuert antreibbar ist, dass im Betrieb der Werkzeugmaschine (2) die Glocke (22) mit gleichem Drehmoment bzw. mit gleicher Drehzahl wie die Hohlwelle (21) und zur Betätigung des Kraftspannfutters (3) mit einer Differenzdrehzahl bzw. einer Drehmomentdifferenz zur Hohlwelle (21) antreibbar ist.

2. Spanneinrichtung nach Anspruch 1,
**dadurch gekennzeichnet,**
**dass** der Rotor (13) des Servomotors (11) über einen Zahnriementrieb (18, 19, 20) unmittelbar mit der Glocke (22) oder dieser vorgeschalteten Verbindungsgliedern (27, 28) trieblich verbunden ist.

3. Spanneinrichtung nach Anspruch 2,
**dadurch gekennzeichnet,**
**dass** als Verbindungsglied (27) ein Planetenradgetriebe (31) als Untersetzungsgetriebe vorgesehen ist, dessen Sonnenrad (32) an einem angetriebenen Zwischenstück (33) angebracht ist und dessen in das Sonnenrad (32) eingreifende Planetenräder (34) in der Hohlwelle (21) abgestützt und mit der Glocke (22) trieblich verbunden ist.

4. Spanneinrichtung nach Anspruch 2,
**dadurch gekennzeichnet,**
**dass** als Verbindungsglied (28) ein Wellengetriebe (41) als Untersetzungsgetriebe vorgesehen ist, dessen verformbares Kupplungsteil (42) mit dem Rotor (13) in Triebverbindung steht und mit der Glocke (22) periodisch koppelbar ist.

5. Spanneinrichtung nach Anspruch 1 bis 4,
**dadurch gekennzeichnet,**
**dass** die Glocke (22) zusätzlich, vorzugsweise zusammen mit dem Rotor (13) des Servomotors (11) in einem an der Spindel (5) der Werkzeugmaschine (2) befestigten Flansch (23) drehbar gelagert ist.

6. Spanneinrichtung nach Anspruch 1 bis 5,
**dadurch gekennzeichnet,**
**dass** die Glocke (22) über einen Rollenwälztrieb (26) oder Gewindespindeln (26") als Umlenkglied (26) mit der Hohlwelle (21) trieblich verbunden ist.

7. Spanneinrichtung nach Anspruch 1 bis 6,
**dadurch gekennzeichnet,**
**dass** die Glocke (22) mittels einer Sicherungseinrichtung (51) mit der Hohlwelle (21) selbsttätig verriegelbar ist.

8. Spanneinrichtung nach Anspruch 7,
**dadurch gekennzeichnet,**
**dass** die Sicherungseinrichtung (51) aus einem in der Glocke (22) entgegen der Kraft einer Feder (55) durch einen Elektromagneten (56) gehaltenen Sicherungsbolzen (52) gebildet ist, der bei Ausfall der Magnetkraft in eine in der Hohlwelle (21) vorgesehene Ausnehmung (57) einrastet.

9. Spanneinrichtung nach Anspruch 7 oder 8,
**dadurch gekennzeichnet,**
**dass** der Sicherungseinrichtung (51) eine mit deren Verriegelungsbolzen (52) zusammenwirkende Stellungsanzeige (59) zugeordnet ist.
